# EUROPÄISCHE PATENTSCHRIFT

(11) **EP 3 017 150 B1**
(45) Veröffentlichungstag und Bekanntmachung des Hinweises auf die Patenterteilung: **17.05.2017**
(21) Anmeldenummer: 14771217.8
(22) Anmeldetag: 08.09.2014
(51) Int. Cl.: F01D 21/00, F01D 21/02

(54) **VERFAHREN ZUM PRÜFEN EINER ÜBERDREHZAHLSCHUTZEINRICHTUNG EINER EINWELLENANLAGE**
METHOD FOR TESTING AN OVERSPEED PROTECTION APPARATUS OF A SINGLE-SHAFT SYSTEM
PROCÉDÉ POUR VÉRIFIER UN DISPOSITIF DE PROTECTION CONTRE LE SURRÉGIME D'UNE INSTALLATION MONO-ARBRE

(30) Priorität: 17.09.2013 EP 13184819
(43) Veröffentlichungstag der Anmeldung: 11.05.2016
(73) Patentinhaber: Siemens Aktiengesellschaft, 80333 München (DE)
(72) Erfinder: OPHEY, Martin, 47638 Straelen (DE); BENNAUER, Martin, 46242 Bottrop (DE); ENGLER,Thorsten, 47447 Moers (DE); HAAS, Susanne, 45481 Mülheim an der Ruhr (DE); PAHL, Andreas, 40589 Düsseldorf (DE); PIECZYK, Marian-Peter, 45476 Mülheim a.d. Ruhr (DE); STAPPER, Martin, 47475 Kamp-Lintfort (DE); VELTMANN, David, 45128 Essen (DE)
(86) Internationale Anmeldenummer: PCT/EP2014/069066
(87) Internationale Veröffentlichungsnummer: WO 2015/039906

(56) Entgegenhaltungen:
- EP-A1- 2 458 180
- EP-A2- 2 372 108
- US-A- 5 199 256

## Beschreibung

Die Erfindung betrifft ein Verfahren zum Prüfen einer Überdrehzahlschutzeinrichtung einer Einwellenanlage, wie es beispielsweise aus der EP-A-2 372 108 bekannt ist. Bei einer Einwellenanlage zur Erzeugung von elektrischer Energie sind eine Gasturbine, eine Dampfturbine und ein Generator auf einem gemeinsamen Strang angeordnet. Im Normalbetrieb der Einwellenanlage wird die elektrische Energie in ein elektrisches Netz eingespeist und der Strang rotiert mit einer Drehzahl, die der Nenndrehzahl der Einwellenanlage entspricht, wie beispielsweise 50 Hz oder 60 Hz. Bei einem Störfall, insbesondere bei einem Abfall der an dem Generator angeschlossenen elektrischen Last, kann die Drehzahl auf Werte oberhalb der Nenndrehzahl ansteigen. Wenn die Drehzahl eine kritische Drehzahl erreicht, wird die Einwellenanlage mechanisch und thermisch übermäßig belastet, was in einer Verkürzung der Lebensdauer der Einwellenanlage resultiert.

Bei Erreichen einer Grenzwertdrehzahl greift eine Überdrehzahlschutzeinrichtung, die ein weiteres Ansteigen der Drehzahl des Strangs unterbindet, wobei die Grenzwertdrehzahl herkömmlich derart gewählt wird, dass sie zwischen der Nenndrehzahl und der kritischen Drehzahl liegt. Herkömmlich wird die Überdrehzahlschutzeinrichtung überprüft, indem die Einwellenanlage in einem Testbetrieb betrieben wird, bei dem die Grenzwertdrehzahl gegenüber der Grenzwertdrehzahl im Normalbetrieb abgesenkt wird, um dadurch während des Testbetriebs eine übermäßige Belastung der Einwellenanlage zu vermeiden.

Wünschenswert wäre es jedoch im Testbetrieb die gleiche Grenzwertdrehzahl wie im Normalbetrieb zu verwenden. Ein solcher Test ist zudem in einigen Ländern, wie beispielsweise in Südkorea, zwingend vorgeschrieben.

Aufgabe der Erfindung ist es, ein Verfahren zum Prüfen einer Überdrehzahlschutzeinrichtung einer Einwellenanlage zu schaffen, wobei das Verfahren nicht zu einer übermäßigen Belastung der Einwellenanlage führt.

Das erfindungsgemäße Verfahren zum Prüfen einer Überdrehzahlschutzeinrichtung einer eine Gasturbine, einen Generator und eine Dampfturbine aufweisenden Einwellenanlage weist die Schritte auf: a) Betreiben der Einwellenanlage bei deren Nenndrehzahl und unter einer an den Generator angeschlossenen elektrischen Last, wobei die Last derart gering gewählt wird, dass nach einem Abwurf der Last die Drehzahl der Einwellenanlage derart ansteigt, dass die Drehzahl unterhalb einer Dampfturbinengrenzwertdrehzahl bleibt, die niedriger als eine Gasturbinengrenzwertdrehzahl ist, wobei die Überdrehzahlschutzeinrichtung derart eingerichtet ist, dass ein erster Überdrehzahlschutz ausgelöst wird, sobald die Drehzahl der Dampfturbine die Dampfturbinengrenzwertdrehzahl erreicht, und ein zweiter Überdrehzahlschutz ausgelöst wird, sobald die Drehzahl der Gasturbine die Gasturbinengrenzwertdrehzahl erreicht; b) Abwerfen der Last; c) Erhöhen des Massenstroms des in die Dampfturbine eingeleiteten Dampfs und/oder des in die Gasturbine eingeleiteten Brennstoffs derart, dass die Drehzahl der Dampfturbine die Dampfturbinengrenzwertdrehzahl erreicht; d) Prüfen, ob der erste Überdrehzahlschutz ausgelöst wird.

Indem die Dampfturbinengrenzwertdrehzahl durch Erhöhen des Massenstroms des Brennstoffs und/oder des Dampfs erreicht wird und nicht etwa durch ein Abwerfen der Last, kann die Dampfturbinengrenzwertdrehzahl vorteilhaft langsam angefahren werden und eine kritische Drehzahl der Einwellenanlage vorteilhaft vermieden werden. Dadurch kann eine übermäßige mechanische und thermische Belastung der Einwellenanlage während des Prüfens der Überdrehzahlschutzeinrichtung vermieden werden, wodurch die Lebensdauer der Einwellenanlage lang ist. Die übermäßige Belastung kann mit dem erfindungsgemäßen Verfahren selbst dann vermieden werden, wenn für die Gasturbinengrenzwertdrehzahl und die Dampfturbinengrenzwertdrehzahl die gleichen Grenzwertdrehzahlen wie im Normalbetrieb der Einwellenanlage eingesetzt werden.

Die Dampfturbine ist bevorzugt mittels einer Kupplung an die Einwellenanlage gekuppelt, wobei die Kupplung einkuppelt, sobald die Dampfturbine die Gasturbine überholen würde, und auskuppelt, wenn die Drehzahl der Dampfturbine niedriger als die der Gasturbine ist, wobei Schritt c) derart durchgeführt wird, dass die Dampfturbine schneller als die Gasturbine beschleunigt wird, wodurch die Kupplung eingekuppelt bleibt. In dem Fall, dass das Massenträgheitsmoment der Gasturbine kleiner als das Massenträgheitsmoment der Dampfturbine ist, beschleunigt die Gasturbine nach einem Lastabwurf schneller als die Dampfturbine, was dazu führen kann, dass die Kupplung auskuppelt. Dadurch, dass die Kupplung eingekuppelt bleibt, rotieren die Gasturbine und die Dampfturbine mit der gleichen Drehzahl, während die Dampfturbine auf ihren Dampfturbinengrenzwert beschleunigt, wodurch es vorteilhaft sichergestellt ist, dass dabei die Drehzahl der Gasturbine eine kritische Drehzahl nicht erreicht.

Das Verfahren weist bevorzugt den Schritt auf: e) Unterbrechen des Massenstroms des in die Dampfturbine eingeleiteten Dampfs in dem Fall, dass der erste Überdrehzahlschutz ausgelöst wird. Das Unterbrechen des Massenstroms des Dampfs wird dazu führen, dass die Kupplung auskuppelt und die Dampfturbine somit unabhängig von der Gasturbine und dem Generator rotiert.

Bevorzugt weist das Verfahren die Schritte auf: f) Erhöhen des Massenstroms des Brennstoffs derart, dass die Drehzahl der Gasturbine die Gasturbinengrenzwertdrehzahl erreicht; g) Prüfen, ob der zweite Überdrehzahlschutz ausgelöst wird. Indem die Gasturbinengrenzwertdrehzahl höher als die Dampfturbinengrenzwertdrehzahl ist, kann somit das Prüfen des zweiten Überdrehzahlschutzes nach erfolgter Prüfung des ersten Überdrehzahlschutzes und unabhängig von dieser Prüfung durchgeführt werden.

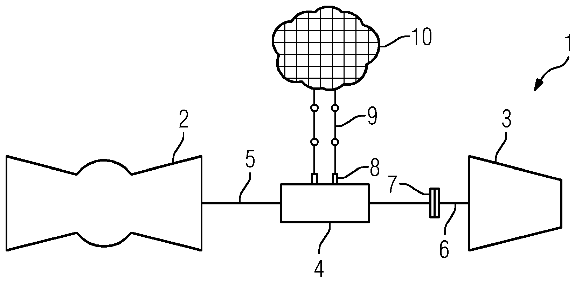

Im Folgenden wird anhand der beigefügten schematischen Zeichnung das erfindungsgemäße Verfahren näher erläutert. Die Figur zeigt eine schematische Ansicht einer Einwellenanlage.

Wie es aus der Figur ersichtlich ist, weist eine Einwellenanlage 1 eine Gasturbine 2, eine Dampfturbine 3 und einen elektrischen Generator 4 auf. Die Gasturbine 2 und die Dampfturbine 4 dienen zur Erzeugung von Rotationsenergie, wobei die Rotationsenergie in dem Generator 4 in elektrische Energie umgewandelt wird. Der Generator 4 ist zwischen der Gasturbine 2 und der Dampfturbine 3 angeordnet. Die Gasturbine 2 weist eine Gasturbinenwelle 5 und die Dampfturbine 3 weist eine Dampfturbinenwelle 6 auf. In der Figur ist dargestellt, dass der Generator 4 und die Gasturbine 2 zusammen auf der Dampfturbinenwelle 5 angeordnet sind. Es ist jedoch ebenfalls denkbar, dass für den Generator 4 eine separate Generatorwelle vorgesehen wird, die mittels einer Kupplung an die Gasturbinenwelle 5 gekuppelt ist.

Die Dampfturbinenwelle 6 ist mittels einer Kupplung 7 mit der Gasturbinenwelle 5 verbunden. Die Kupplung 7 ist derart eingerichtet, dass sie einkuppelt, wenn die Dampfturbine 3 die Gasturbine 2 überholen würde, was bedeutet, dass die Drehzahl der Dampfturbine 3 höher als die Drehzahl der Gasturbine 2 ist. Sobald die Kupplung 7 eingekuppelt ist, rotieren die Gasturbine 2 und die Dampfturbine 3 mit der gleichen Drehzahl. Die Kupplung 7 ist weiterhin eingerichtet, dass sie auskuppelt, wenn die Dampfturbine 3 langsamer als die Gasturbine 2 dreht. Die Kupplung 7 kann beispielsweise eine SSS-Kupplung sein.

Beim Anfahren der einen Einwellenanlage 1 wird zunächst die Gasturbine 2 beschleunigt, wobei die Kupplung 7 ausgekuppelt ist. Anschließend wird durch Schließen eines Schalters 9 ein elektrischer Verbraucher 10 an einen elektrischen Anschluss 8 des Generators 4 angeschlossen. Die Abwärme der Gasturbine 2 wird benutzt, um Dampf zu erzeugen und damit die Dampfturbine 3 anzutreiben. Sobald die Dampfturbine 3 ebenfalls beschleunigt ist, kuppelt die Kupplung 7 ein. Der Stromverbrauch des Verbrauchers 10 entspricht einer an den Generator 4 angeschlossenen elektrischen Last. Fällt nun die an dem Generator 4 angeschlossene Last ab, ohne dass die Massenströme des in die Dampfturbine 3 eingeleiteten Dampfs und/oder des in die Gasturbine 2 eingeleiteten Brennstoffs abgesenkt werden, so führt dies zu einem Ansteigen der Drehzahl der Einwellenanlage 1.

Um ein Ansteigen der Drehzahl der Einwellenanlage 1 auf einen kritischen Wert zu vermeiden, weist die Einwellenanlage 1 eine Überdrehzahlschutzeinrichtung auf. Die Überdrehzahlschutzeinrichtung ist dabei derart eingerichtet, dass ein erster Überdrehzahlschutz ausgelöst wird, sobald die Drehzahl der Dampfturbine 3 eine Dampfturbinengrenzwertdrehzahl erreicht, und ein zweiter Überdrehzahlschutz ausgelöst wird, sobald die Drehzahl der Gasturbine 2 eine Gasturbinengrenzwertdrehzahl erreicht. Bei einem Auslösen des ersten Überdrehzahlschutzes kann beispielsweise der Massenstrom des Dampfs unterbrochen werden. Bei einem Auslösen des zweiten Überdrehzahlschutzes kann ebenfalls der Massenstrom des Brennstoffs unterbrochen werden.

Anhand eines Beispiels wird im Folgenden das erfindungsgemäße Verfahren näher erläutert.

Das beispielhafte Verfahren zum Prüfen einer Überdrehzahlschutzeinrichtung einer eine Gasturbine 2, einen Generator 4 und eine Dampfturbine 3 aufweisenden Einwellenanlage 1, wobei die Dampfturbine 2 mittels einer Kupplung 7 an die Einwellenanlage 1 gekuppelt ist, wobei die Kupplung 7 einkuppelt, sobald die Dampfturbine 3 die Gasturbine 2 überholt, und auskuppelt, wenn die Drehzahl der Dampfturbine 3 kleiner als die der Gasturbine 2 ist, ist mit den Schritten durchzuführen: a) Betreiben der Einwellenanlage 1 bei deren Nenndrehzahl und unter einer an den Generator 4 angeschlossenen elektrischen Last, wobei die Last derart gering gewählt wird, dass nach einem Abwurf der Last die Drehzahl der Einwellenanlage 1 derart ansteigt, dass die Drehzahl unterhalb einer Dampfturbinengrenzwertdrehzahl bleibt, die niedriger als eine Gasturbinengrenzwertdrehzahl ist, wobei die Überdrehzahlschutzeinrichtung derart eingerichtet ist, dass ein erster Überdrehzahlschutz ausgelöst wird, sobald die Drehzahl der Dampfturbine 3 die Dampfturbinengrenzwertdrehzahl erreicht, und ein zweiter Überdrehzahlschutz ausgelöst wird, sobald die Drehzahl der Gasturbine 2 die Gasturbinengrenzwertdrehzahl erreicht; b) Abwerfen der Last; c) Erhöhen des Massenstroms des in die Dampfturbine 3 eingeleiteten Dampfs und/oder des in die Gasturbine 2 eingeleiteten Brennstoffs derart, dass die Drehzahl der Dampfturbine 3 die Dampfturbinengrenzwertdrehzahl erreicht, wobei die Dampfturbine (3) schneller als die Gasturbine (2) beschleunigt wird, wodurch die Kupplung (7) eingekuppelt bleibt; d) Prüfen, ob der erste Überdrehzahlschutz ausgelöst wird; e) Unterbrechen des Massenstroms des in die Dampfturbine (3) eingeleiteten Dampfs in dem Fall, dass der erste Überdrehzahlschutz ausgelöst wird; f) Erhöhen des Massenstroms des Brennstoffs derart, dass die Drehzahl der Gasturbine (2) die Gasturbinengrenzwertdrehzahl erreicht; g) Prüfen, ob der zweite Überdrehzahlschutz ausgelöst wird. Dabei kann beispielsweise die Dampfturbinengrenzwertdrehzahl 106% bis 108% der Nenndrehzahl betragen und die Gasturbinengrenzwertdrehzahl 0,1% bis 0,5% größer als die Dampfturbinengrenzwertdrehzahl sein.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, der durch die angehängten Ansprüche definiert ist.

## Patentansprüche

1. Verfahren zum Prüfen einer Überdrehzahlschutzeinrichtung einer eine Gasturbine (2), einen Generator (4) und eine Dampfturbine (3) aufweisenden Einwellenanlage (1) mit den Schritten:
a) Betreiben der Einwellenanlage (1) bei deren Nenndrehzahl und unter einer an den Generator (4) angeschlossenen elektrischen Last, wobei die Last derart gering gewählt wird, dass nach einem Abwurf der Last die Drehzahl der Einwellenanlage (1) derart ansteigt, dass die Drehzahl unterhalb einer Dampfturbinengrenzwertdrehzahl bleibt, die niedriger als eine Gasturbinengrenzwertdrehzahl ist, wobei die Überdrehzahlschutzeinrichtung derart eingerichtet ist, dass ein erster Überdrehzahlschutz ausgelöst wird, sobald die Drehzahl der Dampfturbine (3) die Dampfturbinengrenzwertdrehzahl erreicht, und ein zweiter Überdrehzahlschutz ausgelöst wird, sobald die Drehzahl der Gasturbine (2) die Gasturbinengrenzwertdrehzahl erreicht;
b) Abwerfen der Last;
c) Erhöhen des Massenstroms des in die Dampfturbine (3) eingeleiteten Dampfs und/oder des in die Gasturbine (2) eingeleiteten Brennstoffs derart, dass die Drehzahl der Dampfturbine (3) die Dampfturbinengrenzwertdrehzahl erreicht;
d) Prüfen, ob der erste Überdrehzahlschutz ausgelöst wird.

2. Verfahren gemäß Anspruch 1,
wobei die Dampfturbine (2) mittels einer Kupplung (7) an die Einwellenanlage (1) gekuppelt ist,
wobei die Kupplung (7) einkuppelt, sobald die Dampfturbine (3) die Gasturbine (2) überholt, und auskuppelt, wenn die Drehzahl der Dampfturbine (3) niedriger als die der Gasturbine (2) ist,
wobei Schritt c) derart durchgeführt wird, dass die Dampfturbine (3) schneller als die Gasturbine (2) beschleunigt wird, wodurch die Kupplung (7) eingekuppelt bleibt.

3. Verfahren gemäß Anspruch 1 oder 2,
mit dem Schritt:
e) Unterbrechen des Massenstroms des in die Dampfturbine (3) eingeleiteten Dampfs in dem Fall, dass der erste Überdrehzahlschutz ausgelöst wird.

4. Verfahren gemäß einem der Ansprüche 1 bis 3,
mit den Schritten:
f) Erhöhen des Massenstroms des Brennstoffs derart, dass die Drehzahl der Gasturbine (2) die Gasturbinengrenzwertdrehzahl erreicht;
g) Prüfen, ob der zweite Überdrehzahlschutz ausgelöst wird.

## Claims

1. Method for testing an overspeed protection apparatus of a single-shaft system (1) having a gas turbine (2), a generator (4) and a steam turbine (3), having the steps of:
a) operating the single-shaft system (1) at its rated speed and under an electric load connected to the generator (4), wherein the load is chosen to be low such that, after the load is shed, the speed of the single-shaft system (1) rises such that the speed remains below a steam turbine limit speed which is lower than a gas turbine limit speed, wherein the overspeed protection apparatus is set up such that a first overspeed protection is triggered as soon as the speed of the steam turbine (3) reaches the steam turbine limit speed, and a second overspeed protection is triggered as soon as the speed of the gas turbine (2) reaches the gas turbine limit speed;
b) shedding the load;
c) raising the mass flow of the steam fed into the steam turbine (3) and/or of the fuel fed into the gas turbine (2) such that the speed of the steam turbine (3) reaches the steam turbine limit speed;
d) checking whether the first overspeed protection is triggered.

2. Method according to Claim 1,
wherein the steam turbine (2) is coupled to the single-shaft system (1) by means of a clutch (7),
wherein the clutch (7) engages as soon as the steam turbine (3) overtakes the gas turbine (2) and disengages when the speed of the steam turbine (3) is lower than that of the gas turbine (2),
wherein step c) is carried out such that the steam turbine (3) is accelerated faster than the gas turbine (2), such that the clutch (7) remains engaged.

3. Method according to Claim 1 or 2, having the step of:
e) interrupting the mass flow of the steam fed into the steam turbine (3) in the event that the first overspeed protection is triggered.

4. Method according to one of Claims 1 to 3, having the steps of:
f) raising the mass flow of the fuel such that the speed of the gas turbine (2) reaches the gas turbine limit speed;
g) checking whether the second overspeed protection is triggered.

## Revendications

1. Procédé de contrôle d'un dispositif de protection vis-à-vis du surrégime d'une installation ( 1 ) à un seul arbre, ayant une turbine ( 2 ) à gaz, une génératrice ( 4 ) et une turbine ( 3 ) à vapeur, comprenant les stades :
a ) on fait fonctionner l'installation ( 1 ) à un seul arbre à son régime nominal et sous une charge électrique raccordée à la génératrice ( 4 ), la charge étant choisie petite, de manière à augmenter, après un délestage de charge, le régime de l'installation ( 1 ) à un seul arbre, de façon à ce que le régime reste en dessous d'un régime de valeur limite de la turbine à vapeur, qui est plus bas qu'un régime de valeur limite de la turbine à gaz, le dispositif de protection vis-à-vis d'un surrégime étant conçu de manière à déclencher une première protection vis-à-vis d'un surrégime, dès que le régime de la turbine ( 3 ) à vapeur atteint le régime de valeur limite de la turbine à vapeur et une deuxième protection vis-à-vis d'un surrégime, dès que le régime de la turbine ( 2 ) à gaz atteint le régime de valeur limite de la turbine à gaz ;
b ) on effectue un délestage de la charge ;
c ) on augmente le courant massique de la vapeur introduite dans la turbine ( 3 ) à vapeur et/ou du combustible introduit dans la turbine ( 2 ) à gaz, de manière à ce que le régime de la turbine ( 3 ) à vapeur atteigne le régime de valeur limite de la turbine à vapeur ;
d ) on contrôle si la première protection vis-à-vis d'un surrégime est déclenchée.

2. Procédé suivant la revendication 1,
dans lequel on accouple la turbine ( 2 ) à vapeur au moyen d'un accouplement ( 7 ) à l'installation ( 1 ) à un seul arbre,
l'accouplement étant accouplé dès que la turbine ( 3 ) à vapeur l'emporte sur la turbine ( 2 ) à gaz, et découplé si le régime de la turbine ( 3 ) à vapeur est plus bas que celui de la turbine ( 2 ) à gaz,
dans lequel on effectue le stade c ), de manière à accélérer la turbine ( 3 ) à vapeur plus vite que la turbine ( 2 ) à gaz, grâce à quoi l'accouplement ( 7 ) reste accouplé.

3. Procédé suivant la revendication 1 ou 2,
comprenant le stade :
e ) on interrompt le courant massique de la vapeur introduite dans la turbine ( 3 ) à vapeur, dans le cas où la première protection vis-à-vis d'un surrégime est déclenchée.

4. Procédé suivant l'une des revendications 1 à 3, comprenant les stades :
f ) on augmente le courant massique du combustible, de manière à ce que le régime de la turbine ( 2 ) à gaz atteigne le régime de valeur limite de la turbine à gaz ;
g ) on contrôle si la deuxième protection vis-à-vis d'un surrégime est déclenchée.
